# EUROPEAN PATENT APPLICATION

(11) **EP 2 441 970 A2**
(43) Date of publication of application: **18.04.2012**
(21) Application number: 10743432.6
(22) Date of filing: 12.02.2010
(51) Int. Cl.: F16B 13/06

(54) **DEVICE FOR FIXING METALLIC STRUCTURES TO THE FLOOR**

(30) Priority: 17.02.2009 ES 200900441
(71) Applicant: Expansión-Fix, S.L., 03440 Ibi Alicante (ES)
(72) Inventor: ADRIAENSENS APARICIO, Pablo José, 46117 Betera (Valencia) (ES); PEREZ LIRES, José Antonio, 46018 Valencia (ES)
(74) Representative: Ungria Lopez, Javier
(86) International application number: PCT/ES2010/000061
(87) International publication number: WO 2010/094820

(57) **Abstract**

The invention relates to a device for fixing metallic structures to the floor, said device consisting of a cylindrical metallic tube (2) with lateral wings (4) and longitudinal openings, in the lower part, from which teeth (11) extend, said teeth being distributed over the external surface of link blocks (9) which expand by screwing a central screw (5) fixed thereto by an upper jig bushing (6), and two central and lower jig bushings (7) that hold and guide the link blocks (9). Pistons (12) are arranged in the region of the openings (3), said pistons moving in opposite directions towards the centre of said region due to the screw (5) having reverse screws in its screwing areas, which push the link blocks (9) outwards during the movement of the pistons, causing the teeth to project out of the tube (2) through the openings (3). The upper end (16) of the screw (5) is hexagonal.

## Description

### OBJECT OF THE INVENTION

As indicated in the title, the present patent relates to a device for fixing metallic structures to the floor, contributing to the intended function several advantages and innovative features, besides from others inherent to its organization and constitution, which will be described in detail below, which represent a remarkable improvement over the systems currently known in the market for the same purpose.

More particularly, the object of the invention focuses on a device purpose of which is to allow fixing metallic structures to the floor, especially structures intended for supporting panels and equipments for the production of solar or photovoltaic energy.

### APPLICATION FIELD OF THE INVENTION

The technical field of the present invention falls within the technical sector of the industry dedicated to the manufacture of devices, utensils and/or tools for fixing structures, particularly for fixing metallic structures to the floor.

### BACKGROUND OF THE INVENTION

As it is known, solar or photovoltaic energy can be developed anywhere in the world, as long as the right technology to do so is provided. Solar energy can be used by solar panels which are formed by semiconductor-type materials, and are responsible for transforming sunlight into electricity.

The main feature of photovoltaic energy lies precisely in its accumulation process and is, at the same time, what differentiates it from conventional electrical energy. The advantage that these systems have is related to the storage capacity they have, since by using sunlight as an energy source, the panels are able to accumulate and then distribute thereof at times when there is no sun.

Photovoltaic energy provides many benefits, including photovoltaic panels are clean, quiet and do not harm the environment, in addition these save a lot of energy. While installing such a panel requires a work, its construction is quite fast and requires, in turn. minimal maintenance, providing, in return, a long shelf life.

For their installation, the photovoltaic panels are generally fixed to a structure that acts as a support, this being in turn fixed to the floor by ground screws, as long as the ground is suited to this type of solution, although it can also be adapted to a conventional base shoe. Depending on the ground, the appropriate type of foundation must be performed. Depending on the type of foundation, anchor bolts should be introduced directly into the ground or a concrete foundation must be done.

Currently, and as a reference to the state of the art, it should be noted that, in general, all screw systems for fixing this type of structures are static. That is, these screws are tapered or cylindrical in cross section, having at its lower end a peripheral slot as a thread, and which penetrate into the ground for fixing thereof.

This system has, as main disadvantage, the erosion of said screws during their placement, in addition, if there is any movement of earth, said screws stop performing their function properly.

There is, therefore, the need for a new system for fixing the aforementioned metallic structures to the floor that avoids the drawbacks outlined above in a practical and effective manner, this being the essential objective of the present invention, on which the other hand, it should be noted that, the existence of any other that, with the same end. has technical, structural characteristics and a configuration similar to those presented by the invention for the device that is advocated herein is unknown by the applicant.

### DESCRIPTION OF THE INVENTION

Thus, the device for fixing metallic structures to the floor proposed herein is configured as a remarkable novelty within its application field, since, according to its implementation, and in an exhaustive manner, the objectives aforementioned as appropriate are satisfactorily achieved, with the characterizing details that make it possible and distinguishing it from what is already known being appropriately reflected In the final claims accompanying this description.

Namely, the device for fixing metallic structures to the floor is essentially formed from a tube, of a metallic nature and with a cylindrical configuration, having longitudinal openings, around the lower half. Moreover, at its top, said tube has a wings designed to allow the proper fixation of the device to the floor.

On the central axis of the tube a threaded screw of small diameter with respect to the diameter of the tube has been provided, which is fixed both at the top and bottom to said tube by two separate jig bushings provided for such purpose, which in turn, and by the diametrical slots having thereof, act as a guide for some link blocks configuration and function of which will be explained below.

Inside the tube, and specifically occupying the aforementioned longitudinal openings in its the bottom, the existence of link blocks is contemplated, one for each opening, with ability to expand through it, with this expansion being responsible for fixing the device to the floor. For such purpose, said link blocks have an outer, substantially flat, face provided with a plurality of transverse ridges or teeth equidistantly distributed along its entire length.

Parallel, at the top and bottom of the tube area that coincides with the openings and coupled to the central screw, two separate pistons with a configuration shaped like a truncated pyramid are contemplated, which, by the thread of the screw are moved in opposite directions to the midpoint of said area, i.e., the lower piston is moved upward and the lower piston downward, said displacement being produced in opposite directions because the screw has the inverse threads in the respective areas along which the pistons are moved.

When traveling, said pistons push out the link blocks that are coupled thereon, so that by expanding the transverse ridges or teeth, these protrude externally to the tube through the longitudinal openings thereof, between which said link blocks are housed, these teeth being fixed to the walls of the ground, so that the device is fixed to the floor and thus immobilized.

For actuating the device, i.e., in order to produce the described movement of the pistons, and the consequent expansion of the link blocks, it will be enough to simply use a conventional actuation key, which is coupled at the upper hexagonal part of the screw, provided for such purpose.

The described device for fixing metallic structures to the floor thus represents an innovative structure with structural and constituent features previously unknown for such purpose, which reasons along with its practical use provide it with sufficient foundation for obtaining the privilege of exclusivity being requested.

### DESCRIPTION OF THE DRAWINGS

For a better understanding of the Invention, the present specification is accompanied with some drawings, in which a preferred embodiment of the invention, according to the principles of the claims is illustrated, only by way of example.

In said drawings,

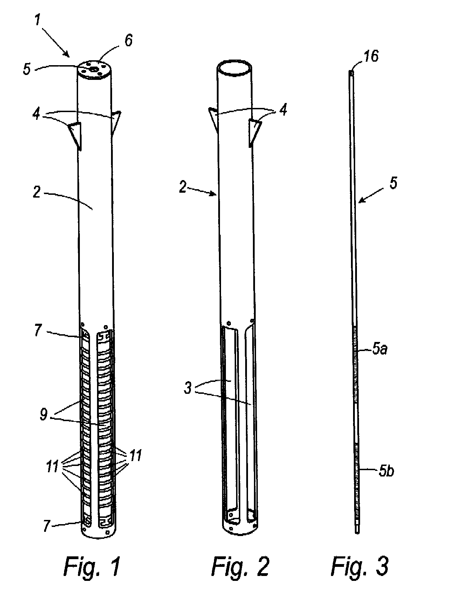

Figure 1 shows a perspective view of the device for fixing metallic structures to the floor, object of the invention, in which its overall external configuration can be seen.
Figure 2 shows a perspective view of the cylindrical metal tube to which the other elements making up the device are coupled; it clearly shows the arrangement of the longitudinal openings,
Figure 3 shows an elevational view of the central rod with two threading areas in opposite directions.

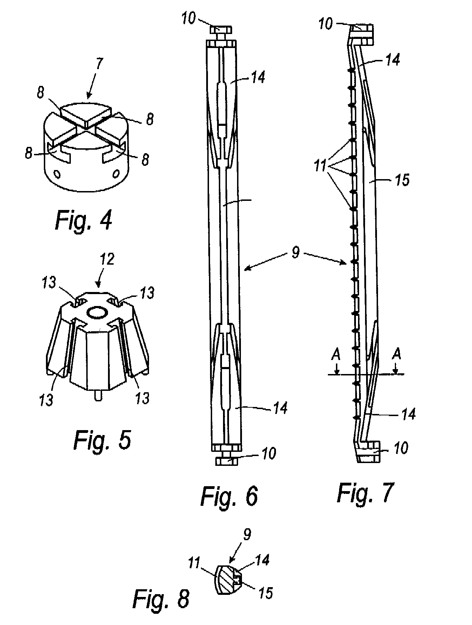

Figure 4 shows a perspective view of one of the jig bushings that serve as support and guide for the link blocks, appreciating its structural configuration, as well as the diametrical slots provided for the introduction of the heads of the link blocks.
Figure 5 shows a perspective view of one of the pistons provided in the device, appreciating therein the truncated pyramid shape thereof as well as the lateral slots that it has in order to couple to the central ridge of the link blocks.
Figures 6 and 7, show respective front and side elevational views of one of the link blocks, appreciating the particular configuration provided as well as the arrangement of transverse ridges or teeth having in the face that is disposed externally to the tube opening.
Figure 8 shows a sectional view of the link block, according to section A-A indicated in Figure 7.

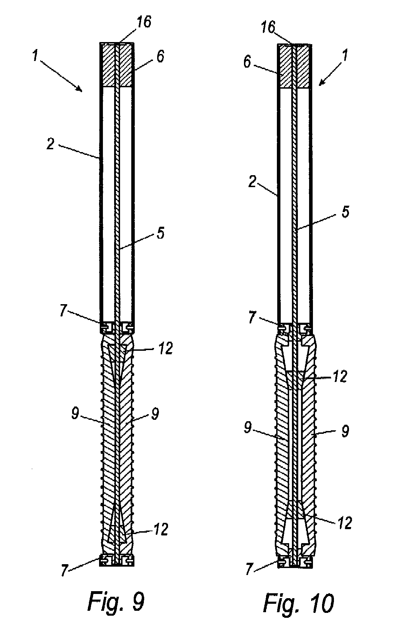

Finally, Figures 9 and 10 are sectional views, according to a longitudinal section of the device as a whole, these being respectively represented in a rest position, in which the link blocks are inserted into the tube, and the other In operating position, in which the link blocks are expanded outward, the teeth of its outer surface sticking out from the tube.

### DESCRIPTION OF AN EMBODIMENT

In view of the mentioned figures and according to the numbering adopted thereon, an embodiment of the device for fixing metallic structures to the floor object of the invention can be seen, which comprises parts and elements described in detail below.

Thus, such as shown in these figures, the device (1) in question is essentially configured from a tube (2) of metallic nature and with a cylindrical shape, provided with longitudinal openings (3), which occupy approximately its lower half, and that also has at its top, wings (4) for the proper fixation of the device (1) to the floor.

On the axial axis of the tube (2) a fine threaded screw (5) has been provided, which is fixed to it via a jig bushing (6), arranged at its upper end, and two jig bushings (7) central and inferiorly located, which central and lower jig bushings (7), in turn and through the diametric slots (8) laterally opened being provided, act as a guide and support for link blocks (9) that are tightly inserted between each of those longitudinal openings (3), coupling to said slots (8) of the jig bushings (7) by inserting therein the heads (10) with matching configuration being provided.

The link blocks (9) have an outer, substantially flat face, provided with a plurality of transverse ridges or teeth (11) equidistantly distributed along its entire length, which are intended to provide the fixation of the device (1) to the floor by expanding the link blocks and radially protrude to the tube through the openings (3) in which these are inserted, as explained below.

Similarly, at the top and bottom of the tube area (2) coincident with the openings (3), two separate pistons (12) with a truncated cone configuration are contemplated, these being symmetrically arranged inserted in the central screw (5), said piston (12) laterally having a tilt and a slot (13) coinciding with the respective falling areas (14) towards the ends, and the central ridge (15) provided at the top and bottom on the inner face of the link blocks (9) that are placed on said pistons (12).

These pistons (12), through the thread of the screw (5), are moved in opposite directions until the midway point into which are inserted, i.e. the lower area of the tube (2) wherein are the openings (3) and the link blocks (9), said displacement in opposite directions being caused because the screw (5) has inverse threads in the respective area (5a) and (5b) along which the upper and lower pistons (12) are moved.

Due to the aforementioned movement of the pistons (12), these slide over the falling areas (14) of the link blocks (9) acting as a guide, causing the push and outward expansion of the link blocks (9) through the openings (3), so that the teeth (11) provided in the outer surface of the link blocks (9) externally protrude from the tube (2) being fixed to the walls of the ground, and thus fixing and immobilizing the device (1),

Finally, it should be mentioned that the upper end (16) of the central screw (5) has a hexagonal configuration, in order to allow its coupling to a conventional key for performing the actuation of the device (1).

Having sufficiently described the nature of the present Invention, as well as the way of implementing thereof, is not considered necessary to extend its explanation for anyone skilled in the art to understand its scope and the advantages derived from it.

Likewise, it is noted that, in its essence, the invention may be put into practice in other embodiments that differ in detail from that indicated by way of example, and which will also be under the claimed protection as long as its fundamental principle is not altered, changes or modified.

## Claims

1. Device for fixing metallic structures to the floor, structures especially designed for supporting panels and equipments for the production of solar or photovoltaic energy, **characterized by** the fact of consisting of a tube (2) of metallic nature and with a cylindrical shape, provided with lateral wings (4), which is also equipped with longitudinal openings (3), through which transverse ridges or teeth (11) equidistantly distributed along its entire length emerge, on the outer surface of link blocks (9) that expand as result of a threaded screw (5) included into the axial axis of the tube (2), so that said teeth (11) are fixed to the walls of the ground, thus fixing and immobilizing the device (1).

2. Device for fixing metallic structures to the floor, according to claim 1, **characterized by** the fact that the longitudinal openings (3) being provided in the tube (2) are arranged at the bottom, and in that the wings (4) are located at the top.

3. Device for fixing metallic structures to the floor, according to claim 1 and 2, **characterized by** the fact that the screw (5) is fixed thereto via a jig bushing (6), arranged at its upper end, and two jig bushings (7) centrally and inferiorly located.

4. Device for fixing metallic structures to the floor, according to claim 1 to 3, **characterized by** the fact that the central and lower jig bushings (7), act as a guide and support for the link blocks (9) that are inserted between each of the longitudinal openings (3) of the tube (2).

5. Device for fixing metallic structures to the floor, according to claim 1 to 4, **characterized by** the fact that, for supporting and guiding the link blocks (9) into the jig bushings (7), said jig bushings (7) have diametric slots (8) laterally opened into which the heads (10) with matching configuration provided in the link blocks (9) are inserted.

6. Device for fixing metallic structures to the floor, according to claim 1, **characterized by** the fact that, at the top and bottom of the tube are (2) coincident with the openings (3), two separate pistons (12) with a truncated cone configuration are contemplated, these being symmetrically arranged inserted in the screw (5), which pistons (12), through the thread of the screw (5), are moved in opposite directions until the midway point into which these are inserted, and because the screw (5) has inverse threads in the respective areas (5a) and (5b) along which the upper and lower pistons (12) are moved causing said displacement of the pistons (12) in opposite directions.

7. Device for fixing metallic structures to the floor, according to claims 1 and 6, **characterized by** the fact that the pistons (12) laterally have a tilt and a slot (13) coinciding with the respective falling areas (14) towards the ends, and the central ridge (15) having at the top and bottom in their inner side the link blocks (9) that are located on said pistons (12), so that with the mentioned displacement of the pistons (12), these slide over the failing areas (14) of the link blocks (9) acting as a guide, causing the push and expansion outward the link blocks (9) through the openings (3), making the teeth (11) protruding outside the tube (2).

8. Device for fixing metallic structures to the floor, according to claim 1, **characterized by** the fact that the upper end (16) of the central screw (5) has a hexagonal configuration, in order to allow the coupling of a conventional key thereto for performing the actuation of the device (1).
